# EUROPÄISCHE PATENTSCHRIFT

(11) **EP 2 735 175 B1**
(45) Veröffentlichungstag und Bekanntmachung des Hinweises auf die Patenterteilung: **01.04.2015**
(21) Anmeldenummer: 12753375.0
(22) Anmeldetag: 13.07.2012
(51) Int. Cl.: H04W 4/02, H04W 4/22

(54) **VERFAHREN ZUM BEREITSTELLEN EINER KOMMUNIKATIONSVERBINDUNG**
METHOD FOR PROVIDING A COMMUNICATION LINK
PROCÉDÉ DE FOURNITURE D'UNE LIAISON DE COMMUNICATION

(30) Priorität: 22.07.2011 AT 4182011
(43) Veröffentlichungstag der Anmeldung: 28.05.2014
(73) Patentinhaber: Frequentis AG, 1100 Wien (AT)
(72) Erfinder: FABIANEK, Christoph, A-2540 Bad Vöslau (AT); GRIMM, Reinhard, A-3100 St. Pölten (AT); VAN LOO, Reinard, A-1110 Wien (AT)
(74) Vertreter: Wildhack & Jellinek
(86) Internationale Anmeldenummer: PCT/AT2012/050105
(87) Internationale Veröffentlichungsnummer: WO 2013/013255

(56) Entgegenhaltungen:
- EP-A1- 1 840 717
- US-A1- 2006 200 305
- US-A1- 2010 042 940
- US-B1- 6 771 969

## Beschreibung

Die Erfindung betrifft ein Verfahren zum Bereitstellen einer Verbindung zwischen einer Kommunikationszentrale und einer Anzahl Kommunikationseinheiten gemäß dem Oberbegriff des Patentanspruches 1. Weiters betrifft die Erfindung eine Kommunikationszentrale gemäß dem Oberbegriff des Patentanspruch 8.

Erfindungsgemäße Verfahren und Kommunikationszentralen worden, insbesondere im Bereich der Koordinierung von Einsatzkräften, wie Polizei, Feuerwehr, Rettung, Militär, Sicherheits- und Wachdienste usw. gewerblich eingesetzt.

In bisher bestehenden Anlagen besteht der wesentliche Nachteil, dass einzelne Kommunikationsteilnehmer, die sich in einem vorgegebenen Gebiet befinden, einzeln anhand ihrer jeweiligen Rufnummer angewählt werden müssen, um eine Nutzdaten-Kommunikation zwischen der Zentrale und der jeweiligen Kommunikationseinheit oder - durch die Zentrale vermittelt - zwischen der jeweiligen Kommunikationseinheit mit einer anderen Kommunikationseinheit zu errichten. Es ist für den Betreiber der Kommunikationszentrale äußerst aufwendig, die Positionen der einzelnen Kommunikationseinheiten zu erfassen und anschließend eine Nutzdatenverbindung zwischen Kommunikationseinheiten anhand deren geographischer Lage aufzubauen was zum Beispiel in US 6771969 offenbart wird. Beim Aufbau kommt es nicht unbedingt primär auf den geographischen Abstand zweier Einheiten an, vielmehr soll es auch möglich sein, Verbindungen mit Kommunikationseinheiten aufzunehmen, die sich durch eine konkrete geographische Lage auszeichnen, etwa einen besseren Überblick über das Geschehen haben oder noch am Weg zum Einsatzort sind.

Aufgabe der Erfindung ist es somit, den Aufbau von Verbindungen zwischen Kommunikationseinheiten anhand ihrer geographischen Position bzw. Lage von einer Kommunikationszentrale aus zu vereinfachen.

Die Erfindung löst diese Aufgabe mit einem bei einem Verfahren der eingangs genannten Art mit den Merkmalen des Kennzeichens des unabhängigen Patentanspruches 1.

Weiters löst die Erfindung diese Aufgabe bei einer Kommunikationszentrale der eingangs genannten Art mit den Merkmalen des Kennzeichens des Patentanspruches 11.

Erfindungsgemäß ist bei einem Verfahren zum Bereitstellen einer Verbindung zwischen einer Kommunikationszentrale und einer Anzahl von Kommunikationseinheiten, wobei die Kommunikationszentrale eine Anzeigeeinheit sowie eine Auswahleinheit zur Auswahl eines von der Anzeigeeinheit dargestellten Bereichs und einen Kommunikationscontroller aufweist,
vorgesehen, dass
a) die geographischen Position der Kommunikationseinheiten in aufeinanderfolgenden Zeitpunkten ermittelt wird,
b) auf der Anzeigeeinheit eine Landkarte dargestellt wird und für jede Kommunikationseinheit an ihrer jeweiligen ermittelten geographischen Position in der Landkarte ein Symbol dargestellt wird,
c) nach Auswahl eines Bereichs der Landkarte der Anzeigeeinheit mit der Auswahleinheit diejenigen Kommunikationseinheiten ermittelt werden, deren jeweils zugeordnete Symbole sich innerhalb des ausgewählten Bereichs befinden oder mit diesem überlappen, und
d) eine Nutzdatenverbindung zwischen dem Kommunikationskontroller den ausgewählten Kommunikationseinheiten aufgebaut wird.

Hierdurch kann eine in der Kommunikationszentrale befindliche Person auf einfache Weise Kommunikation zwischen einzelnen Kommunikationseinheiten abhängig von ihrer geographischen Position aufbauen. Es ist somit die Errichtung einer Verbindung, z. B. einer Sprechfunkverbindung, der Kommunikationszentrale zu allen in einem vorgegebenen geographischen Bereich gelegenen Kommunikationseinheiten sowie eine Kommunikation der im jeweiligen geographischen Bereich gelegenen Kommunikationseinheiten untereinander möglich. Eine aufwendige Positionsermittlung der einzelnen Kommunikationseinheiten sowie eine anschließende Einzelanwahl der Kommunikationseinheiten händisch durchgeführt wird entfällt somit.

Ein bevorzugter Aspekt der Erfindung sieht vor, dass der von der Anzeigeeinheit dargestellte Bereich der Landkarte variiert, insbesondere verschoben, vergrößert und/oder verkleinert, wird, und/oder der auf der Anzeigeeinheit dargestellte Bereich der Landkarte derart festgelegt wird, dass auf der Anzeigeeinheit Symbole für sämtliche Kommunikationseinheiten und/oder für diejenigen Kommunikationseinheiten mit denen eine Kommunikationsverbindung besteht, dargestellt sind. Hierdurch wird eine verbesserte Orientierung des Operators auf der Kommunikationszentrale ermöglicht.

Um eine besonders rasche und effiziente Ermittlung der jeweiligen Positionen der Kommunikationseinheiten zu ermöglichen, kann vorgesehen sein, dass die Kommunikationseinheiten jeweils eine Positionsbestimmungseinheit aufweisen, wobei die Kommunikationseinheiten ihre jeweilige Positionsinformationen unabhängig vom Aufbau einer Nutzdatenverbindung in vorgegebenen Zeitabständen über eine Positionsdatenverbindung an den Kommunikationscontroller der Kommunikationszentrale übermitteln.

Zur Übermittlung und Darstellung von die jeweilige Kommunikationseinheit betreffenden Zusatzinformationen kann vorgesehen sein, dass die Kommunikationseinheiten Zusatzdaten unabhängig vom Aufbau einer Nutzdatenverbindung an die Kommunikationszentrale übermitteln, wobei diese Zusatzdaten gegebenenfalls gemeinsam mit den Symbolen auf der Anzeigeeinheit dargestellt werden und/oder aufgrund der Zusatzdaten unterschiedliche Symbole für die jeweilige Kommunikationseinheit dargestellt werden.

Um auf geänderte räumliche Positionen einzelner Kommunikationseinheiten bzw. einzelner Kommunikationsteilnehmer Rücksicht zu nehmen, kann vorgesehen sein, dass die auf der Anzeigeeinheit und/oder auf der weiteren Anzeigeeinheit dargestellten Daten und/oder Informationen zu vorgegebenen aufeinanderfolgenden Zeitpunkten aktualisiert werden.

Zur Vereinfachung der Bedienung sowie zur Erhöhung der Übersichtlichkeit für den Operator der Kommunikationszentrale kann vorgesehen sein, dass die Auswahleinheit und die Anzeigeeinheit einem Touchscreen zugehören.

Ein weiterer Aspekt der Erfindung sieht vor, dass vor der Auswahl von Bereichen und Symbolen Verbindungsgruppen vorgegeben werden, denen die jeweils ausgewählten Kommunikationseinheiten zugeordnet werden, wobei gegebenenfalls Nutzdaten zwischen sämtlichen der Kommunikationseinheiten über die Kommunikationszentrale an alle übrigen Kommunikationseinheiten derselben Verbindungsgruppe übermittelt werden. Hierdurch wird eine Einrichtung mehrerer voneinander getrennter Verbindungsgruppen ermöglicht. Mehrere Kommunikationseinheiten können miteinander in Verbindung treten, als ob sie auf derselben Frequenz kommunizieren würden.

Zur Erhöhung der Übersichtlichkeit für den Operator der Kommunikationszentrale kann vorgesehen sein, dass die Daten sämtlicher aufgebauter Nutzdatenverbindungen auf zumindest einer weiteren Anzeigeeinheit dargestellt werden und/oder dass für jede Verbindungsgruppe jeweils eine eigene weitere Anzeigeeinheit vorgesehen ist, die sämtliche der Verbindungsgruppe zugehörigen Kommunikationseinheiten, insbesondere als Symbole, darstellt.

Zur vorteilhaften und übersichtlichen Anwahl von Symbolen kann vorgesehen sein, dass die Auswahl des ausgewählten Bereichs sowie der jeweiligen Symbole und Kommunikationseinheiten nach einer oder mehrerer der folgenden Arten erfolgt:
a) Antippen eines einzelnen Symbols,
b) Ziehen einer geschlossenen Linie mit der Auswahleinheit, wobei der ausgewählte Bereich dem Inneren der geschlossenen Linie entspricht,
c) Antippen eines Punkts auf der Landkarte, wobei eine vorab vorgegebener Region als Bereich ausgewählt wird, innerhalb dessen sich der angetippte Punkt befindet.

Zur einfachen Abwahl bzw. zur Unterbrechung von Nutzdatenverbindungen kann vorgesehen sein, dass bei Auswahl eines Bereichs, innerhalb dessen sich ein einer bereits ausgewählten Kommunikationseinheit zugeordnetes Symbol befindet,
die Nutzdatenverbindung zu der jeweiligen Kommunikationseinheit, unterbrochen oder beendet wird und/oder
die Kommunikationseinheit aus der jeweiligen Verbindungsgruppe entfernt wird.
Hierbei ist es insbesondere möglich, Kommunikationseinheiten nach erfolgtem Aufbau einer Nutzdatenverbindung aufgrund ihrer geographischen Lage oder Position wieder von dieser zu trennen.

Die Erfindung betrifft weiters eine Kommunikationszentrale mit einer Anzeigeeinheit und einem Kommunikationscontroller zur Kommunikation mit einer Anzahl von Kommunikationseinheiten. Diese Kommunikationszentrale umfasst
a) Mittel zum Empfang der geographischen Position der einzelnen Kommunikationseinheiten über eine Positionsdatenverbindung
b) Mittel zur graphischen Darstellung einer Landkarte auf der Anzeigeeinheit
c) Mittel zur graphischen Darstellung von Symbolen an den jeweiligen geographischen Positionen der Kommunikationseinheiten entsprechenden Stellen in der Landkarte,
d) eine Auswahleinheit zur Auswahl eines Bereichs aus der von der Anzeigeeinheit dargestellten Landkarte
e) Mittel zur Auswahl der ausgewählten Kommunikationseinheiten, deren jeweils zugeordnete Symbole sich innerhalb des angegebenen Bereichs befinden oder dem Bereich zugeordnet sind oder mit dem Bereich überlappen,
f) Mittel zur Ansteuerung des Kommunikationscontrollers zum Aufbau einer Nutzdatenverbindung zu den ausgewählten Kommunikationseinheiten.

Eine solche Kommunikationszentrale ermöglicht auf einfache Weise den Aufbau von Nutzdatenverbindungen zwischen einzelnen Kommunikationseinheiten, anhand der jeweiligen geographischen Lage bzw. Position. Eine aufwendige manuelle Ermittlung der Position der jeweiligen Kommunikationseinheiten sowie ein anschließender Aufbau einer Nutzdatenverbindung aufgrund von Rufnummern oder ähnlichen Kennungen, kann somit vorteilhafterweise entfallen.

Ein bevorzugte Weiterbildung der Erfindung umfasst weiters eine Bereichsauswahleinheit zum Verschieben, zur Vergrößerung und zur Verkleinerung des von der Anzeigeeinheit dargestellten Bereichs der Landkarte. Hierdurch wird eine verbesserte Navigation und Koordination innerhalb der Kommunikationszentrale ermöglicht. Weiters wird die Übersichtlichkeit und Bedienbarkeit der Zentrale verbessert.

Um Kartendaten sowie Positionsdaten der einzelnen Kommunikationseinheiten voneinander unabhängig ermitteln und auf einem gemeinsamen Display darstellen zu können, kann vorgesehen sein, dass eine Darstellungssteuerungseinheit vorgesehen ist, der die jeweiligen ermittelten Positionen der einzelnen Kommunikationseinheiten sowie in einer Datenbank gespeicherte Karteninformationen, insbesondere die geographische Position von Straßenpunkten und/oder die geographische Position weiterer feststehender und/oder bewegbarer Einrichtungen, zugeführt sind,
wobei die Darstellungssteuerungseinheit auf Grundlage der Ihr zugeführten Daten ein Anzeigebild erstellt, das der Anzeigeeinheit zugeführt ist

Zur Vereinfachung der Bedienung sowie zur Erhöhung der Übersichtlichkeit für den Operator der Kommunikationszentrale kann vorgesehen sein, dass die Auswahleinheit und die Anzeigeeinheit einem Touchscreen zugehören.

Ein weiterer Aspekt der Erfindung sieht vor, dass vor der Auswahl von Bereichen und Symbolen Verbindungsgruppen vorgegeben sind, denen die jeweils ausgewählten Kommunikationseinheiten zuordenbar sind, wobei gegebenenfalls der Kommunikationscontroller derart programmierbar ist, dass Nutzdaten zwischen sämtlichen der Kommunikationseinheiten einer Verbindungsgruppe über die Kommunikationszentrale an alle übrigen Kommunikationseinheiten derselben Verbindungsgruppe übermittelt werden. Hierdurch wird eine Einrichtung mehrerer voneinander getrennter Verbindungsgruppen ermöglicht. Mehrere Kommunikationseinheiten können miteinander in Verbindung treten, als ob sie auf derselben Frequenz kommunizieren würden.

Zur verbesserten Übersichtlichkeit sowie zur einfacheren Darstellung kann vorteilhafterweise vorgesehen sein, dass zumindest eine weitere Anzeigeeinheit vorgesehen ist zur Darstellung der Daten sämtlicher aufgebauter Nutzdatenverbindungen und/oder dass für jede Verbindungsgruppe eine eigene weitere Anzeigeeinheit vorgesehen ist, die sämtliche der Verbindungsgruppe zugehörigen Kommunikationseinheiten, insbesondere als Symbole, darstellt.

Zur vorteilhaften und übersichtlichen Anwahl von Symbolen kann vorgesehen sein, dass eine Zuordnungseinheit vorgesehen ist, die der Auswahleinheit nachgeschaltet ist, die den Kommunikationscontroller zum Aufbau von Nutzdatenverbindungen anweist und die gegebenenfalls einen Speicher zum Ablegen und Verwalten der Verbindungsgruppen aufweist, wobei die Zuordnungseinheit eine Auswahl des ausgewählten Bereichs sowie der jeweiligen Symbole und
Kommunikationseinheiten nach einer oder mehrerer der folgenden Arten ermöglicht:
a) Antippen eines einzelnen Symbols,
b) Ziehen einer geschlossenen Linie mit der Auswahleinheit, wobei der ausgewählte Bereich dem Inneren der geschlossenen Linie entspricht,
c) Antippen eines Punkts auf der Landkarte, wobei ein vorab vorgegebener Bereich ausgewählt wird, innerhalb dessen sich der angetippte Punkt befindet.

Zur einfachen Abwahl bzw. zur Unterbrechung von Nutzdatenverbindungen kann vorgesehen sein, dass Zuordnungseinheit bei Auswahl eines Bereichs, innerhalb dessen sich ein einer bereits ausgewählten oder einer Verbindungsgruppe zugehörigen Kommunikationseinheit zugeordnetes Symbol befindet,
die Nutzdatenverbindung zu der jeweiligen Kommunikationseinheit, unterbricht oder beendet und/oder die Kommunikationseinheit aus der jeweiligen Verbindungsgruppe entfernt. Hierbei ist es insbesondere möglich, Kommunikationseinheiten nach erfolgtem Aufbau einer Nutzdatenverbindung anhand der geographischen Lage oder Position der Kommunikationseinheiten wieder von dieser zu trennen.

Eine besonders bevorzugte Ausführungsform der Erfindung wird anhand der Zeichnungsfiguren näher dargestellt.

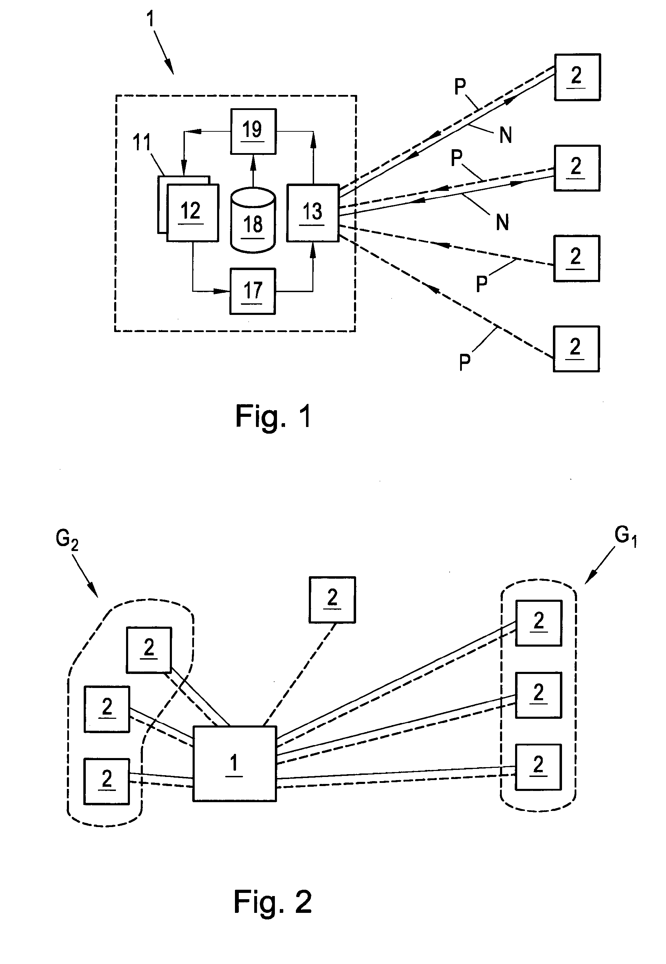

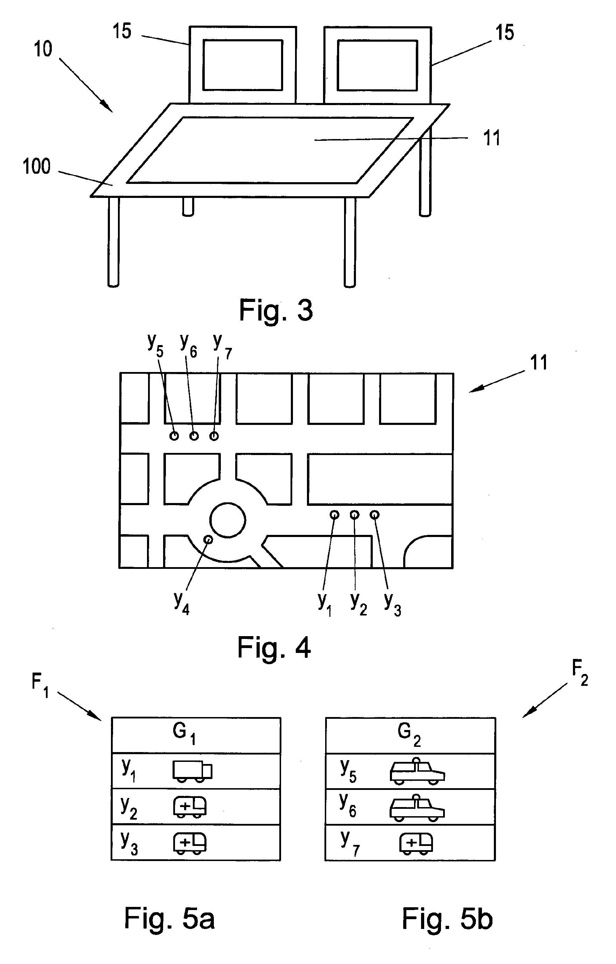

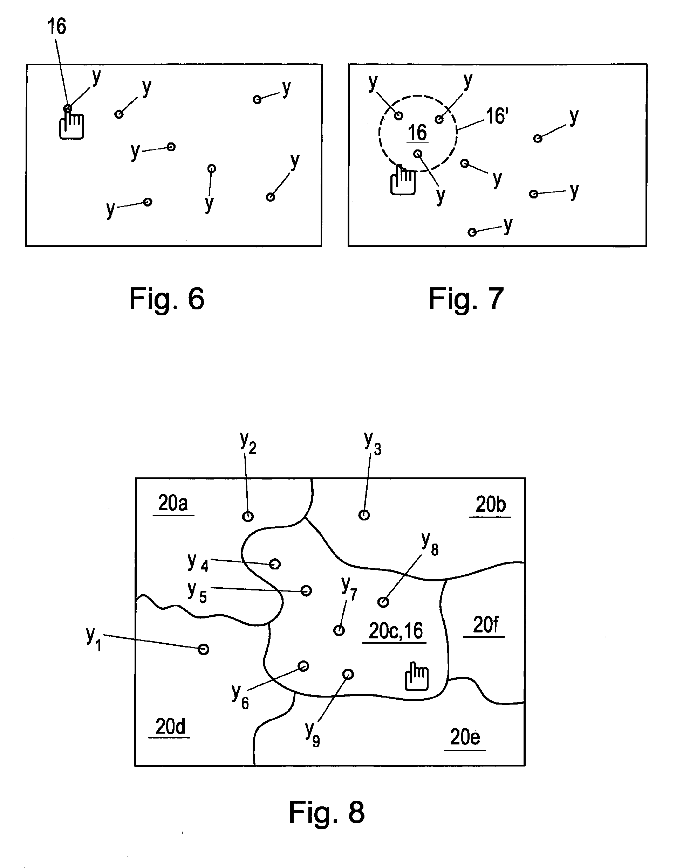

Fig. 1 zeigt schematisch den Aufbau mehrerer Nutzdatenverbindungen zwischen der Kommunikationszentrale und einer Anzahl von Kommunikationseinheiten. Fig. 2 zeigt schematisch zwei Verbindungsgruppen. Fig. 3 zeigt einen Bedienteil einer Ausführungsform einer erfindungsgemäßen Kommunikationszentrale. Fig. 4 zeigt einen auf einer Anzeigeeinheit dargestellten Bereich. Fig. 5a und 5b zeigen auf weiteren Anzeigeeinheiten dargestellte Bildinformationen mit Verbindungsgruppenfenstern. Fig. 6 bis 8 zeigen drei unterschiedliche Arten der Auswahl von Bereichen auf einer Landkarte.

In Fig. 1 sind schematisch der Aufbau einer Kommunikationszentrale 1 sowie mehrere mit der Kommunikationszentrale 1 in Verbindung stehende Kommunikationseinheiten 2 dargestellt. Die Kommunikationszentrale 1 verfügt über einen Kommunikationscontroller 13, der den Aufbau einer Funkverbindung zu den einzelnen Kommunikationseinheiten 2 ermöglicht. Der Kommunikationscontroller 13 kann mit einer oder mit mehreren der Kommunikationseinheiten 2 gleichzeitig in Funkverbindung stehen. Grundsätzlich bestehen zwischen der Kommunikationszentrale 1 und den Kommunikationseinheiten 2 zwei unterschiedliche Arten von Verbindungen.

Eine erste Art der Verbindung, im Folgenden als Positionsdatenverbindung P bezeichnet und in den **Fig. 1 und 2** strichliert dargestellt, zwischen der Kommunikationszentrale 1 und den Kommunikationseinheiten 2 wird ständig aufrechterhalten oder zu vorgegebenen Zeitpunkten aufgebaut und zur kurzfristigen Datenübertragung genutzt. Diese Art von Verbindung betrifft die Übertragung von Informationen betreffend die Position, beispielsweise in Form von GPS-Daten. Zur Ermittlung der Position umfasst die jeweilige Kommunikationseinheit 2 einen GPS-Empfänger, der die jeweiligen Position der Kommunikationseinheit 2 ermittelt.

Weiters können noch Zusatzdaten, beispielsweise die Art bzw. Eigenschaften des die Kommunikationseinheit 2 bedienenden Kommunikationsteilnehmers übermittelt werden, also z. B. Information darüber, ob es sich beim Kommunikationsteilnehmer um ein Notarzifahrzeug, einen Kranwagen der Feuerwehr, ein Einsatzleiter oder einen einzelnen Polizisten usw. handelt. Diese Informationen können direkt an der Kommunikationseinheit 2 eingestellt werden.

Die Zusatzdaten können ferner auch die Art des Fahrzeuges, in dem sich die jeweilige Kommunikationseinheit 2 befindet, oder die Ausbildung, Qualifikation und/oder Funktion der Person oder Personen, die die Kommunikationseinheit 2 mit sich trägt bzw. tragen, an die Kommunikationszentrale 1, umfassen.

Allenfalls kann noch eine zusätzliche Alarm-Information gemeinsam mit den Positionsdaten von der jeweiligen Kommunikationseinheit 2 zur Kommunikationszentrale 1 übertragen werden.

Über die Positionsdatenverbindung P werden, wie im voranstehenden Ausführungsbeispiel dargestellt, Positions- und Zusatzdaten, von den einzelnen Kommunikationseinheiten 2 zur Kommunikationszentral 1 übertragen. Die so übermittelten Informationen werden im Folgenden als Positionsinformationen bezeichnet.

Die mittels der Positionsdatenverbindung P übertragenen Positionsinformationen der Kommunikationseinheiten 2 werden der Kommunikationszentrale 1 zugeführt und dienen der Darstellung der einzelnen Kommunikationseinheiten 2 in Form von Symbolen Y auf einer Anzeige.

Die Kommunikationseinheiten 2 übermitteln ihre Positionsinformationen zu aufeinanderfolgenden Zeitpunkten, um dem Operator der Kommunikationszentrale 1 einen Überblick über die geographische Verteilung der einzelnen Kommunikationseinheiten 2 zu ermöglichen. Vorteilhafterweise werden die Positionsinformationen der einzelnen Kommunikationseinheiten 2 in sehr kurzen Zeitintervallen an die Kommunikationszentrale 1 übermittelt. Um den Datenverkehr zwischen den Kommunikationseinheiten 2 und der Kommunikationszentrale 1 zu verringern, kann eine entsprechend geringere Übertragungshäufigkeit der geographischen Position von den Kommunikationseinheiten 2 an die Kommunikationszentrale 1 vorgesehen werden. Dies ist insbesondere dann von Vorteil, wenn die einzelnen Kommunikationseinheiten 2, beispielsweise Feuerwehrfahrzeuge nach dem Erreichen ihres Einsatzorts, ihre Position nicht mehr verändern. Eine ständige Übertragung der Positionsinformationen würde zu einer unnötigen Belastung des Funknetzes führen und keinen zusätzlichen Nutzen bringen, sodass die intervalle, in denen die Positionsinformationen übertragen werden, auf einige Minuten verlängert werden können.

Gegebenenfalls kann bei im Bedarfsfall die Häufigkeit der Übertragung der Positionsdaten höher gestellt werden, um dem Operator den Überblick über diejenigen Kommunikationseinheiten 2 zu erleichtern. Im vorliegenden Ausführungsbeispiel ist neben dem Normalzustand ein solcher Bedarfszustand vorgesehen. Im Normalzustand werden die Positionsdaten in Abständen, beispielsweise von 600 Sekunden, von den Kommunikationseinheiten 2 zur Kommunikationszentrale übertragen. Im Bedarfszustand werden die Positionsdaten häufiger, im vorliegenden Ausführungsbeispiel in Intervallen von 10 Sekunden, übertragen, um dem Operator eine genaue und zuverlässige Information über die Position des jeweiligen Kommunikationsteilnehmers zu ermöglichen.

Neben der Positionsdatenverbindung kann zwischen der Kommunikationszentrale 1 und den einzelnen Kommunikationseinheiten 2 eine weitere Art der Verbindung, im Folgenden als Nutzdatenverbindung N bezeichnet und in den **Fig. 1 und 2** durchgezogen dargestellt, aufgebaut werden, die der wechselseitigen Übertragung von Information - in den meisten Fällen handelt es sich um Sprachinformationen - zwischen der jeweiligen Kommunikationseinheit 2 und der Kommunikationszentrale 1 dient. Es können über die Nutzdatenverbindung N Informationen von der Kommunikationszentrale 1 an die Kommunikationseinheiten 2 und umgekehrt übertragen werden. Weiters können Informationen zwischen den einzelnen Kommunikationseinheiten 2 über die Kommunikationszentrale 1 ausgetauscht werden.

Im vorliegenden Ausführungsbeispiel werden Kommunikationseinheiten 2 zu Verbindungsgruppen G₁, G₂ zusammengefasst, die miteinander über die Kommunikationszentrale 1 in Verbindung stehen. So kann beispielsweise ein Teilnehmer mittels einer der Kommunikationseinheiten 2 Informationen auf alle anderen Kommunikationseinheiten 2 sowie an die Kommunikationszentrale 1 übertragen.

Im vorliegenden Ausführungsbeispiel ist vorgesehen, dass mehrere Kommunikationseinheiten 2 gleichzeitig Informationen übermitteln können, die von allen der Verbindungsgruppe G₁, G₂ zugehörigen Kommunikationseinheiten 2 empfangen werden. **Fig. 2** zeigt eine Kommunikationszentrale 1 mit einer Anzahl von Kommunikationseinheiten 2, wobei zwei Verbindungsgruppen G₁, G₂ zu je drei Kommunikationseinheiten 2 vorgesehen sind.

In der hier dargestellten bevorzugten Ausführungsform der Erfindung werden Sprachinformationen zwischen den einzelnen Kommunikationseinheiten 2 ausgetauscht.

Es ist jedoch auch möglich, alternativ oder zusätzlich Bildinformationen oder sonstige Daten wie beispielsweise Messwerte an alle der jeweiligen Verbindungsgruppe G₁, G₂ zugeordneten Kommunikationseinheiten 2 sowie an die Kommunikationszentrale 1 zu übermitteln. Als Messwerte können je nach Anwendungsbereich unterschiedliche Werte, insbesondere die Resultate chemischer Schadstoffmessungen, radioaktive Messungen, Temperatur, Feuchtigkeit, pH-Wert usw. fungieren bzw. herangezogen werden. Die zwischen den einzelnen Verbindungsgruppenmfgliedern übertragenen Informationen werden im Folgenden als Nutzinformationen bezeichnet.

Zur Steuerung der Informations- bzw. Datenübertragung umfasst die Kommunikationszentrale einen Kommunikationscontroller 13. Dieser weist eine Sende- und Empfangsantenne, wodurch der Kommunikationscontroller 13 mit den einzelnen Kommunikationseinheiten sowohl zur Übertragung der Positionsinformationen als auch der Nutzinformationen eine Funkverbindung aufbauen kann.

Dem Kommunikationscontroller 13 können einzelne Verbindungsgruppen G₁, G₂ von Kommunikationseinheiten 2 von außen vorgegeben werden. Dem Kommunikationscontroller 13 ist zu diesem Zweck eine Zuordnungseinheit 17 vorgeschaltet, die dem Kommunikationscontroller 13 die einzelnen Verbindungsgruppen G₁, G₂ von Kommunikationseinheiten 13 vorgibt.

Der Kommunikationscontroller 13 leitet die von einem Mitglied der Jeweiligen Verbindungsgruppe G₁, G₂ abgegebenen Nutzinformationen an die übrigen Kommunikationseinheiten 2 sowie gegebenenfalls an eine Kommunikationsatelle innerhalb der Kommunikationszentrale 1 weiter, die von einem Operator bedient wird. Weiters empfängt der Kommunikationscontroller 13 sämtliche Positionsinformationen der einzelnen Kommunikationseinheiten 2 und leitet sie an eine Darstellungssteuereinheit 19 weiter.

In **Fig. 3** ist der Bedienteil der Ausführungsform der erfindungsgemäßen Kommunikationszentrale 1 dargestellt. Dem Bedienteil dieser besonderen Ausführungsform vorgeschaltet ist eine Darstellungssteuereinheit 19 **(****Fig. 1****).** Der Bedienteil umfasst eine der Darsteilungssteusreinheit 19 nachgeschaltete Anzeigeinheit 11, die als Flachbildschirm oder LED-Panel ausgestaltet ist und die in die Platte 100 eines Leitstellentisches 10 eingepasst ist. Im vorliegenden Ausführungsbeispiel ist die Platte 100 des Leitstellentisches 10 horizontal angeordnet, wodurch ermöglicht wird, dass eine Vielzahl von Personen rund um den Leitstellentisch 10 stehen kann.

Alternativ dazu kann die Platte 100 des Leitstellentisches 10, die die Anzeigeinheit 11 trägt, auch schräg gestellt sein, sodass sich für den Operator eine angenehmere Arbeitsposition ergibt.

Anstelle eines in den Leitstellentisch eingepassten Flachbildschirm kann als Anzeigeeinheit 11 auch ein Projektor verwendet werden, der das jeweilige Anzeigebild auf einen in der Tischplatte des Leitstellentischs 10 angeordnete Fläche projiziert.

Der Darstellungssteuereinheit 19 sind einerseits die einlangenden Positionsinformationen der einzelnen Kommunikationseinheiten 2 und andererseits in einer Datenbank 18 abgespeicherte Geländeinformationen bzw. Karteninformationen, gegebenenfalls Verkehrsinformationen und/oder Wetterinformationen und/oder sonstige für den Einsatzzweck relevante georeferenzierte Informationen zugeführt. Die Darsteilungssteuereinheit 19 erstellt hieraus ein Anzeigebild, das auf der Anzeigeeinheit 11 dargestellt wird.

Die Darstellungssteuereinheit 19 erstellt ein zweidimensionales Bild der Landkarte, auf dem die einzelnen Symbole überlagert dargestellt sind. Alternativ ist auch eine dreidimensionale Darstellung der Landkarte möglich, wobei der Operator die Möglichkeit hat, die dreidimensionale Darstellung der Landkarte zu verändern, die Karte zu drehen, aufzukippen, heran- und wegzuzoomen usw. Auf der dreidimensionalen Landkarte kann allenfalls auch das Höhenprofil der jeweiligen Landschaft dargestellt sein. Alternativ kann ein Höhenprofil dargestellt werden, wobei anstelle der geographischen Höhe ein anderes Attribut wie etwa die Temperatur, Pegelstände oder der Grad der Kontamination mit Giftstoffen angegeben ist Gegebenenfalls können auch die einzelnen Symbole dreidimensional dargestellt werden.

Auf der Anzeigeeinheit 11 ist, wie in **Fig. 3** dargestellt, eine Landkarte dargestellt. Im vorliegenden Ausführungsbeispiel entspricht die Landkarte einem in **Fig. 4** dargestelltem Straßenplan. **Fig. 4** zeigt ferner einzelne Symbole Y, wobei jedes der Symbole Y jeweils einer Kommunikationseinheit 2 entspricht. Die Anordnung der Symbole Y erfolgt aufgrund der von der jeweiligen Kommunikationseinheit 2 selbst ermittelten geographischen Position. Jedes Symbol Y ist in Bezug auf die Landkarte an der Position dargestellt, an der sich die jeweilige dem Symbol Y zugeordnete Kommunikationseinheit 2 befindet.

Weiters kann die Kommunikationszentrale 1 eine Zeige- und Auswahleinheit 12 umfassen. Im vorliegenden Ausführungsbeispiel ist die Zeige- und Auswahleinheit 12 als berührungssensitive durchsichtige Schicht ausgestaltet, die unmittelbar oberhalb der Anzeigeeinheit 11 angeordnet ist. Die Anzeigeeinheit 11 sowie die Zeige- und Auswahieinheit 12 bilden in ihrer Gesamtheit einen Touchscreen bzw. ein Touchdisplay.

Alternativ die Zeige- und Auswahleinheit 11 durch eine Einheit zur Bedienung mittels Gestensteuerung durch eine Computermaus realisiert sein.

Einzelne Bildpositionen an der Anzeigeeinheit 11 können durch Druckbeaufschlagung der Zeige- und Auswahleinheit 12 mit den Fingern, Stiften oder anderen Gegenständen ausgewählt werden. Wo im Folgenden von der Bedienung durch einen Finger gesprochen wird, kann alternativ stets auch ein Stift oder ein anderer Gegenstand verwendet werden.

Im folgenden wird beschrieben, wie einzelne räumlich im selben Bereich befindliche Kommunikationseinheiten 2 zu einer gemeinsamen Verbindungsgruppe G₁, G₂ zusammengefasst werden können und somit eine gemeinsame Funkverbindung zur Übertragung von Nutzdaten zwischen den einzelnen Kommunikationseinheiten 2 errichtet werden kann.

Das Zusammenfassen der einzelnen Kommunikationseinheiten 2 zu Verbindungsgruppen G₁, G₂ erfolgt durch Auswahl der den Kommunikationseinheiten 2 zugeordneten Symbolen Y durch den Operator. Auf weiteren der Darstellungssteuereinheit 19 nachgeschalteten weiteren Anzeigeeinheiten 15 wird neben der Karte noch eine Anzahl von Verbindungsgruppenfenstern F₁, F₂ dargestellt, wobei jedes Verbindungsgruppenfenster F₁, F₂ einer Verbindungsgruppe G₁, G₂ von miteinander verbundenen Kommunikationseinheiten 2 entspricht. Im jeweiligen Verbindungsgruppenfenster F₁, F₂ sind Informationen Ober die einzelnen der Verbindungsgruppe G₁, G₂ zugeordneten Kommunikationseinheiten 2 dargestellt. Fig. 5a und 5b zeigen den auf den weiteren Anzeigeneinheiten 15 dargestellten Inhalt. Fig. 5a zeigt, dass der ersten Verbindungsgruppe G₁ die Fahrzeuge angehören, die in Fig. 4 mit den Symbolen Y₁, Y₂, Y₃ dargestellt sind. Es handelt sich dabei um ein Feuerwehrfahrzeug (Symbol V₁) sowie zwei Rettungsfahrzeuge (Symbol Y₂, Y₃). Fig. 5b zeigt die Fahrzeuge der zweiten Verbindungsgruppe G₂. Hierbei handelt es sich um zwei Polizeifahrzeuge (Symbol Y₅, Y₆) sowie ein Rettungsfahrzeug (Symbol Y₇).

Alternativ können die Verbindungsgruppenfenster F₁, F₂ auch unmittelbar auf der Anzeigeeinheit 11 dargestellt werden oder es können auch alle Verbindungsgruppenfenster F₁, F₂ eine eigene weitere Anzeigeeinheit 15 vorgesehen sein.

Durch Anwahl eines Verbindungsgruppenfensters F₁, F₂ kann der Operator diejenige Verbindungsgruppe G₁, G₂ auswählen, deren zugehörige Kommunikationseinheiten 2 im folgenden festzulegen sind. Aufgrund der Zuordnung zur Verbindungsgruppe G₁, G₂ wird eine Nutzdatenverbindung N zur jeweiligen Kommunikationseinheit 2 erstellt. Nachdem der Operator eine Verbindungsgruppe G₁, G₂ angewählt hat, können der Verbindungsgruppe G₁, G₂ neue Mitglieder auf eine oder mehrere der im folgenden dargestellten Arten hinzugefügt oder auch entfernt werden.

Die im Folgenden dargestellten Auswahlmethoden dienen zur Auswahl eines oder mehrerer Symbole Y₁, ... Y₇. Bei allen Methoden wird durch den Operator ein Bereich 16 auf der Anzeigeeinheit 11 festgelegt. Kommunikationseinheiten 2. denen Symbole Y zugeordnet sind, die sich innerhalb des Bereichs 16 befinden, werden einer Verbindungsgruppe G₁, G₂ hinzugefügt oder aus dieser entfernt, d. h. es wird eine Nutzdatenverbindung zu der Kommunikationseinheit 2 erstellt oder unterbrochen.

Die erste bevorzugte Art **(****Fig. 6****)** des Hinzufügens oder Entfernens von Mitgliedern zu/aus einer Verbindungsgruppe G₁, G₂ liegt darin, das der jeweiligen Kommunikationseinheit 2 zugeordnete Symbol Y auf der Anzeigeinheit 11 anzutippen bzw. zu berühren. Nach der Berührung wird die jeweilige Position der Auswahleinheit 12 selektiert. Anschließend wird ermittelt, welches Symbol Y der selektiertem Position der Auswahleinheit 12 zugeordnet ist und die dem jeweiligen Symbol Y zugeordnete Kommunikationseinheit 2 wird der Verbindungsgruppe G₁, G₂ hinzugefügt bzw. sofern diese der Verbindungsgruppe G₁, G₂ bereits zugehört, wieder aus der Verbindungsgruppe G₁, G₂ entfernt. In diesem Fall besteht der ausgewählte Bereich 16 lediglich in einem einzigen Punkt auf der Anzeigeeinheit 11.

Eine weitere bevorzugte Art der Festlegung **(****Fig. 7****)** einer Verbindungsgruppe G₁, G₂ oder des Hinzufügens oder Entfernens von Mitgliedern aus einer Verbindungsgruppe G₁, G₂ besteht darin, dass der Operator auf der Zeige- und Auswahleinheit 12 eine geschlossene Kurve 16' zieht. Der von der geschlossenen Kurve umschlossene Bereich gilt als ausgewählter Bereich 16. Sämtliche Symbole Y, die sich innerhalb der jeweiligen geschlossenen Kurve bzw. im ausgewählten Bereich 16 befinden sowie deren jeweils zugeordnete Kommunikationseinheiten 2 werden ausgewählt. Diese Funktionalität kann vorteilhafterweise dazu verwendet werden, eine Verbindungsgruppe G₁, G₂ neu festzulegen.

Befinden sich etwa unmittelbar vor einem Brandeinsatz sämtliche relevanten Fahrzeuge in unmittelbarer Nähe des Brandorts, kann mittels einfachen "Einkreisens" aller in der Nähe des Brandorts befindlichen Symbole Y eine Verbindungsgruppe G₁, G₂ betreffend den Brandeinsatz erstellt werden. Sollte ein einzelnes Polizeiauto während der Auswahl der Verbindungsgruppe G₁, G₂ zufälligerweise im Bereich des Brandorts gewesen sein, kann dieses durch Antippen bzw. Anklicken wieder abgewählt werden.

Eine weitere bevorzugte Art **(****Fig. 8****)** der Festlegung einer Verbindungsgruppe G₁, G₂ kann vorgenommen werden, indem eine Verbindungsgruppe G₁, G₂ derart festgelegt wird, dass ihr sämtliche Kommunikationseinheiten 2 innerhalb einer vorgegebenen geographischen Region 20a, ... 20f angehören. Der gesamte Anzeigenbereich ist in Regionen 20a, ... 20f unterteilt, beispielsweise in Verwaltungsbezirke oder Zuständigkeitssprengel. Durch Antippen eines Punkts innerhalb einer Region 20c können sämtliche innerhalb der jeweiligen Region 20a, ... 20f befindlichen Symbole Y₄, ... Y₉ bzw. deren zugeordnete Kommunikationseinheiten 2 ausgewählt werden. Diese Art der Auswahl von Symbolen Y bzw. Kommunikationseinheiten 2 entspricht im wesentlichen der vorstehend beschriebenen Art mittels "Einkreisen" mit dem Unterschied, dass die geschlossenen Kurven vorab durch die Grenzen der einzelnen Regionen 20a, ... 20f vorgegeben sind. Die ausgewählten Bereiche 16 entsprechen den Regionen 20a, ... 20f bzw. Verwaltungsbezirken oder Zuständigkeitssprengeln.

Neben diesen Auswahlmethoden ist es selbstverständlich auch möglich, einzelne Einheiten nicht durch Auswahl auf der Karte sondern auf bekannte Weise per Anwahl über eine Liste oder Verbindungsnummer zu selektieren.

Alle dargestellten Methoden können auch parallel zueinander verwendet werden.

Die jeweiligen ausgewählten Verbindungsgruppen G₁, G₂ werden an die Zuordnungseinheit 17 übermittelt, die dem Kommunikationscontroller 13 die entsprechenden Verbindungsinformationen zur Leitung der Nutzdaten vorgibt.

In dieser bevorzugten Ausführungsform der Erfindung weisen sämtliche Kommunikationseinheiten 2 einen Übermittlungsknopf oder Sprechknopf auf. Wird dieser gedrückt gehalten, erhält die Kommunikationseinheit 2 die Erlaubnis zur Informationsübertragung, während alle anderen Kommunikationseinheiten 2 innerhalb der Verbindungsgruppe G₁, G₂ diese Daten empfangen. Wird der Übermittlungsknopf oder Sprechknopf einer Kommunikationseinheit 2 während der Informationsübertragung durch eine andere Kommunikationseinheit 2 derselben Verbindungsgruppe G₁, G₂ betätigt, bleibt diese Kommunikationseinheit 2 weiterhin zur Übertragung von Informationen berechtigt.

Alternativ kann vorgesehen sein, dass mehrere Kommunikationseinheiten 2 gemeinsam Daten übertragen, wobei die von diesen Kommunikationseinheiten 2 übertragenen Daten an die übrigen Kommunikationseinheiten 2 derselben Verbindungsgruppe 2 übertragen werden. Im Fall der Sprachkommunikation werden die von den sendenden Kommunikationseinheiten 2 übertragenen Daten überlagert.

Im vorliegenden Ausführungsbeispiel kann der auf der Anzeigeeinheit 11 dargestellte Bereich der Landkarte vergrößert, verkleinert und verschoben werden. Dies kann durch Betätigung eines hierfür vorgesehenen Aktionsfelds auf der Anzeigeeinheit 11 vorgenommen werden. Soll der dargestellte Bereich der Landkarte verschoben werden, kann die Richtung, in die die Karte verschoben werden soll, durch die Auswahl- und Zeigeeinheit 12 vorgegeben werden. Der Operator legt seinen Finger auf die Auswahl- und Zeigeeinheit 12 und zieht seinen Finger über die Auswahl- und Zeigeeinheit 12, wobei sich die Landkarte mit dem Finger des Operators mitbewegt. Aus dem Stand der Technik sind jedoch auch andere Vorgehensweisen zum Verschieben einer Landkarte bekannt, etwa das Vorsehen von konkreten Verschiebeknöpfien oder Verschiebefeldern, nach deren Anwahl die Landkarte nach eine vorgegebenen Richtung verschoben wird.

Auch eine Vergrößerung und Verkleinerung des dargestellten Bereichs der Landkarte kann auf unterschiedliche aus dem Stand der Technik wohlbekannte Art erfolgen.

## Patentansprüche

1. Verfahren zum Bereitstellen einer Verbindung zwischen einer Kommunikationszentrale (1) und einer Anzahl von Kommunikationseinheiten (2), wobei die Kommunikationszentrale (1) eine Anzeigeeinheit (11) sowie eine Auswahleinheit (12) zur Auswahl eines von der Anzeigeeinheit (11) dargestellten Bereichs (16) und einen Kommunikationscontroller (13) aufweist, wobei
a) die geographischen Position der Kommunikationseinheiten (2) in aufeinanderfolgenden Zeitpunkten ermittelt wird,
b) auf der Anzeigeeinheit (11) eine Landkarte dargestellt wird und für jede Kommunikationseinheit (2) an ihrer jeweiligen ermittelten geographischen Position in der Landkarte ein Symbol (Y) dargestellt wird,
c) nach Auswahl eines Bereichs (16) der Landkarte der Anzeigeeinheit (11) mit der Auswahleinheit (12) diejenigen Kommunikationseinheiten (2) ermittelt werden, deren jeweils zugeordnete Symbole (Y) sich innerhalb des ausgewählten Bereichs (16) befinden oder mit diesem überlappen, und
d) eine Nutzdatenverbindung (N) zwischen dem Kommunikationskontroller (13) den ausgewählten Kommunikationseinheiten (2) aufgebaut wird,
**dadurch gekennzeichnet, dass**
die Auswahl des ausgewählten Bereichs (16) sowie der jeweiligen Symbole (Y) und Kommunikationseinheiten (2) nach einer oder mehrerer der folgenden Arten erfolgt:
e) Ziehen einer geschlossenen Linie (16') mit der Auswahleinheit (12), wobei der ausgewählte Bereich (16) dem Inneren der geschlossenen Linie entspricht, oder
f) Antippen eines Punkts auf der Landkarte, wobei eine vorab vorgegebener Region (20a, ... 20f) als Bereich (16) ausgewählt wird, innerhalb dessen sich der angetippte Punkt befindet.

2. Verfahren nach Anspruch 1, **dadurch gekennzeichnet, dass** der von der Anzeigeeinheit (11) dargestellte Bereich der Landkarte variiert, insbesondere verschoben, vergrößert und/oder verkleinert, wird, und/oder der auf der Anzeigeeinheit (11) dargestellte Bereich der Landkarte derart festgelegt wird, dass auf der Anzeigeeinheit (11) Symbole (Y) für sämtliche Kommunikationseinheiten (2) und/oder für diejenigen Kommunikationseinheiten (2) mit denen eine Kommunikationsverbindung besteht, dargestellt sind.

3. Verfahren nach Anspruch 1 oder 2, **dadurch gekennzeichnet, dass** die Kommunikationseinheiten (2) jeweils eine Positionsbestimmungseinheit aufweisen, wobei die Kommunikationseinheiten (2) ihre jeweilige Positionsinformationen unabhängig vom Aufbau einer Nutzdatenverbindung (N) in vorgegebenen Zeitabständen über eine Positionsdatenverbindung an den Kommunikationscontroller (13) der Kommunikationszentrale (1) übermitteln.

4. Verfahren nach einem der vorangehenden Ansprüche, **dadurch gekennzeichnet, dass** die Kommunikationseinheiten (2) Zusatzdaten unabhängig vom Aufbau einer Nutzdatenverbindung an die Kommunikationszentrale (1) übermitteln, wobei diese Zusatzdaten gegebenenfalls gemeinsam mit den Symbolen (Y) auf der Anzeigeeinheit (11) dargestellt werden und/oder aufgrund der Zusatzdaten unterschiedliche Symbole (Y) für die jeweilige Kommunikationseinheit (2) dargestellt werden.

5. Verfahren nach einem der vorangehenden Ansprüche, **dadurch gekennzeichnet, dass** die auf der Anzeigeeinheit (11) und/oder auf der weiteren Anzeigeeinheit (15) dargestellten Daten und/oder Informationen zu vorgegebenen aufeinanderfolgenden Zeitpunkten aktualisiert werden.

6. Verfahren nach einem der vorangehenden Ansprüche, **dadurch gekennzeichnet, dass** die Auswahleinheit (12) und die Anzeigeeinheit (11) einem Touchscreen zugehören.

7. Verfahren nach einem der vorangehenden Ansprüche, **dadurch gekennzeichnet, dass** vor der Auswahl von Bereichen (16) und Symbolen (Y) Verbindungsgruppen (G1, G2) vorgegeben werden, denen die jeweils ausgewählten Kommunikationseinheiten (2) zugeordnet werden, wobei gegebenenfalls Nutzdaten zwischen sämtlichen der Kommunikationseinheiten (2) über die Kommunikationszentrale (1) an alle übrigen Kommunikationseinheiten (2) derselben Verbindungsgruppe (G1, G2) übermittelt werden.

8. Verfahren nach einem der vorangehenden Ansprüche, **dadurch gekennzeichnet, dass** die Daten sämtlicher aufgebauter Nutzdatenverbindungen (N) auf zumindest einer weiteren Anzeigeeinheit (15) dargestellt werden und/oder dass für jede Verbindungsgruppe (G1, G2) jeweils eine eigene weitere Anzeigeeinheit (15) vorgesehen ist, die sämtliche der Verbindungsgruppe (G1, G2) zugehörigen Kommunikationseinheiten (2), insbesondere als Symbole (Y), darstellt.

9. Verfahren nach einem der vorangehenden Ansprüche, **dadurch gekennzeichnet, dass** bei Auswahl eines Bereichs (16), innerhalb dessen sich ein einer bereits ausgewählten Kommunikationseinheit (2) zugeordnetes Symbol (Y) befindet,
die Nutzdatenverbindung (N) zu der jeweiligen Kommunikationseinheit (2), unterbrochen oder beendet wird und/oder
die Kommunikationseinheit (2) aus der jeweiligen Verbindungsgruppe (G1, G2) entfernt wird.

10. Kommunikationszentrale mit einer Anzeigeeinheit (11) und einem Kommunikationscontroller (13) zur Kommunikation mit einer Anzahl von Kommunikationseinheiten (2), umfassend
a) Mittel zum Empfang der geographischen Position der einzelnen Kommunikationseinheiten (2) über eine Positionsdatenverbindung (P)
b) Mittel (19) zur graphischen Darstellung einer Landkarte auf der Anzeigeeinheit (11)
c) Mittel (19) zur graphischen Darstellung von Symbolen (Y) an den jeweiligen geographischen Positionen (X) der Kommunikationseinheiten (2) entsprechenden Stellen in der Landkarte,
d) eine Auswahleinheit (12) zur Auswahl eines Bereichs (16) aus der von der Anzeigeeinheit (11) dargestellten Landkarte
e) Mittel zur Auswahl der ausgewählten Kommunikationseinheiten (2), deren jeweils zugeordnete Symbole (Y) sich innerhalb des angegebenen Bereichs (16) befinden oder dem Bereich (16) zugeordnet sind oder mit dem Bereich (16) überlappen,
f) Mittel (17) zur Ansteuerung des Kommunikationscontrollers (13) zum Aufbau einer Nutzdatenverbindung (N) zu den ausgewählten Kommunikationseinheiten (2),
**dadurch gekennzeichnet, dass**
eine Zuordnungseinheit (17) vorgesehen ist, die der Auswahleinheit (12) nachgeschaltet ist, die den Kommunikationscontroller (13) zum Aufbau von Nutzdatenverbindungen (N) anweist und die gegebenenfalls einen Speicher zum Ablegen und Verwalten der Verbindungsgruppen (G1, G2) aufweist, wobei die Zuordnungseinheit (17) eine Auswahl des ausgewählten Bereichs (16) sowie der jeweiligen Symbole (Y) und Kommunikationseinheiten (2) nach einer oder mehrerer der folgenden Arten ermöglicht:
g) Ziehen einer geschlossenen Linie mit der Auswahleinheit (12), wobei der ausgewählte Bereich (16) dem Inneren der geschlossenen Linie (16') entspricht, oder
h) Antippen eines Punkts auf der Landkarte, wobei ein vorab vorgegebener Bereich (16) ausgewählt wird, innerhalb dessen sich der angetippte Punkt befindet.

11. Kommunikationszentrale nach Anspruch 10, gekennzeichnet durch eine Bereichsauswahleinheit zum Verschieben, zur Vergrößerung und zur Verkleinerung des von der Anzeigeeinheit (11) dargestellten Bereichs der Landkarte.

12. Kommunikationszentrale nach einem der Ansprüche 10 oder 11, **dadurch gekennzeichnet, dass** eine Darstellungssteuerungseinheit (19) vorgesehen ist, der die jeweiligen ermittelten Positionen (X) der einzelnen Kommunikationseinheiten (2) sowie in einer Datenbank (18) gespeicherte Karteninformationen, insbesondere die geographische Position (Z) von Straßenpunkten und/oder die geographische Position weiterer feststehender und/oder bewegbarer Einrichtungen, zugeführt sind,
wobei die Darstellungssteuerungseinheit (19) auf Grundlage der ihr zugeführten Daten ein Anzeigebild erstellt, das der Anzeigeeinheit (11) zugeführt ist.

13. Kommunikationszentrale nach einem der Ansprüche 10 bis 12, **dadurch gekennzeichnet, dass** die Auswahleinheit (12) und die Anzeigeeinheit (11) einem Touchscreen zugehören.

14. Kommunikationszentrale nach einem der Ansprüche 10 bis 13, **dadurch gekennzeichnet, dass** vor der Auswahl von Bereichen (16) und Symbolen (Y) Verbindungsgruppen (G1, G2) vorgegeben sind, denen die jeweils ausgewählten Kommunikationseinheiten (2) zuordenbar sind, wobei gegebenenfalls der Kommunikationscontroller (13) derart programmierbar ist, dass Nutzdaten zwischen sämtlichen der Kommunikationseinheiten (2) einer Verbindungsgruppe (G1, G2) über die Kommunikationszentrale (1) an alle übrigen Kommunikationseinheiten (2) derselben Verbindungsgruppe übermittelt werden.

15. Kommunikationszentrale nach einem der Ansprüche 10 bis 14, **dadurch gekennzeichnet, dass** zumindest eine weitere Anzeigeeinheit (15) vorgesehen ist zur Darstellung der Daten sämtlicher aufgebauter Nutzdatenverbindungen (N) und/oder dass für jede Verbindungsgruppe (G1, G2) eine eigene weitere Anzeigeeinheit (15) vorgesehen ist, die sämtliche der Verbindungsgruppe (G1, G2) zugehörigen Kommunikationseinheiten (2), insbesondere als Symbole (Y), darstellt.

16. Kommunikationszentrale nach einem der Ansprüche 10 bis 15, **dadurch gekennzeichnet, dass** Zuordnungseinheit (17) bei Auswahl eines Bereichs (16), innerhalb dessen sich ein einer bereits ausgewählten oder einer Verbindungsgruppe (G1, G2) zugehörigen Kommunikationseinheit (2) zugeordnetes Symbol (Y) befindet,
die Nutzdatenverbindung (N) zu der jeweiligen Kommunikationseinheit (2), unterbricht oder beendet und/oder die Kommunikationseinheit (2) aus der jeweiligen Verbindungsgruppe (G1, G2) entfernt.

## Claims

1. A method for providing a connection between a communication center (1) and a number of communication units (2), wherein the communication center (1) has a display unit (11) as well as a selection unit (12) for selecting an area (16) represented by the display unit (11), and a communication controller (13), wherein
a) the geographical position of the communication units (2) is determined at consecutive instants,
b) a map is represented on the display unit (11), and a symbol (Y) is represented on the map for each communication unit (2) in the respectively determined geographical position thereof,
c) upon selection of an area (16) of the map of the display unit (11), the selection unit (12) determines those of the communication units (2) the respectively associated symbols (Y) of which are located within the selected area (16) or overlap therewith, and
d) a user data link (N) is established between the communication controller (13) [and] the selected communication units (2),
**characterized in that**
the selection of the selected area (16) as well as the respective symbols (Y) and the communication units (2) is performed in one or more of the following ways:
e) drawing a closed line (16') with the selection unit (12), wherein the selected area (16) is the inside of the closed line, or
f) tapping a point on the map, wherein a previously predefined region (20a ... 20f) is selected as the area (16) wherein the tapped point is located.

2. The method according to claim 1, **characterized in that** the area of the map represented by the display unit (11) is varied, in particular shifted, enlarged, and/or reduced, and/or the area of the map represented on the display unit (11) is fixed so that the display unit (11) represents symbols (Y) for all of the communication units (2) and/or for those of the communication units (2) with which a communication link exists.

3. The method according to claim 1 or 2, **characterized in that** the communication units (2) have a positioning unit, respectively, wherein the communication units (2), independently from the establishment of a user data link (N), transfer the respective position information thereof to the communication controller (13) of the communication center (1) via a position data link in predefined time intervals.

4. The method according to any of the preceding claims, **characterized in that** the communication units (2) transfer additional data to the communication center (1), independently from the establishment of a user data link, wherein said additional data is possibly represented on the display unit (11) together with the symbols (Y), and/or based on the additional data, different symbols (Y) are represented for the respective communication unit (2).

5. The method according to any of the preceding claims, **characterized in that** the data and/or information represented on the display unit (11) and/or the additional display unit (15) is/are updated at predefined consecutive instants.

6. The method according to any of the preceding claims, **characterized in that** the selection unit (12) and the display unit (11) are associated with a touch screen.

7. The method according to any of the preceding claims, **characterized in that** before areas (16) and symbols (Y) are selected, connecting groups (G1, G2) are predefined to which the respectively selected communication units (2) are assigned, wherein possibly user data is transferred among all of the communication units (2) via the communication center (1) to all of the other communication units (2) of the same connection group (G1, G2).

8. The method according to any of the preceding claims, **characterized in that** the data of all of the established user data links (N) is represented on at least one further display unit (15), and/or **in that** for each connection group (G1, G2), respectively one further own display unit (15) is provided which represents, in particular as symbols (Y), all of the communication units (2) of the connection group (G1, G2).

9. The method according to any of the preceding claims, **characterized in that** upon selection of an area (16) wherein a symbol (Y) assigned to a communication unit (2) already selected is located,
the user data link (N) with the respective communication unit (2) is stopped or terminated, and/or
the communication unit (2) is removed from the respective connection group (G1, G2).

10. A communication center with a display unit (11) and a communication controller (13) for communication with a number of communication units (2), comprising
a) means for receiving the geographical position of the individual communication units (2) via a position data link (P),
b) means (19) for graphically representing a map on the display unit (11),
c) means (19) for graphically representing symbols (Y) at the respective geographical positions (X) of locations on the map corresponding to the communication units (2),
d) a selection unit (12) for selecting an area (16) from the map represented on the display unit (11),
e) means for selecting the selected communication units (2) the respectively assigned symbols (Y) of which are located within the indicated area (16) or assigned to the area (16) or overlap with the area (16),
f) means (17) for driving the communication controller (13) for establishing a user data link (N) with the selected communication units (2),
**characterized in that**
an assignment unit (17) is provided which is placed downstream of the selection unit (12) and instructs the communication controller (13) to establish user data links (N), and possibly has a memory for storing and managing the connection groups (G1, G2), wherein the assignment unit (17) allows for the selected area (16) and the respective symbols (Y) and the communication units (2) to be selected in one or more of the following ways:
g) drawing a closed line with the selection unit (12), wherein the selected area (16) is the inside of the closed line (16'), or
h) tapping a point on the map, wherein a previously predefined region (16) is selected as the area wherein the tapped point is located.

11. The communication center according to claim 10, **characterized by** an area selection unit for shifting, enlarging, and reducing the area of the map represented by the display unit (11).

12. The communication center according to any of claims 10 or 11, **characterized in that** a representation control unit (19) is provided which is supplied with the respective determined positions (X) of the individual communication units (2) and map data stored in a database (18), in particular the geographical position (Z) of waypoints and/or the geographical position of further fixed and/or mobile facilities,
wherein the representation control unit (19), based on the data supplied thereto, creates a display image which is supplied to the display unit (11).

13. The communication center according to any of claims 10 to 12, **characterized in that** the selection unit (12) and the display unit (11) are associated with a touch screen.

14. The communication center according to any of claims 10 to 13, **characterized in that** before areas (16) and symbols (Y) are selected, connection groups (G1, G2) are predefined to which the respectively selected communication units (2) can be assigned, wherein possibly the communication controller (13) can be programmed so that user data among all of the communication units (2) of a connection group (G1, G2) is transferred to all of the other communication units (2) of the same connection group via the communication center (1).

15. The communication center according to any of claims 10 to 14, **characterized in that** at least one more display unit (15) is provided for representing the data of all user data links (N) established, and/or **in that** for each connection group (G1, G2) a distinctive further display unit (15) is provided representing, in particular as symbols (Y), all of the communication units (2) belonging to the connection group (G1, G2).

16. The communication center according to any of claims 10 to 15, **characterized in that** upon selection of an area (16) wherein a symbol (Y) assigned to a communication unit (2) already selected or belonging to a communication group (G1, G2) is located, the assignment unit (17)
stops or terminates the user data link (N) with the respective communication unit (2), and or removes the communication unit (2) from the respective connection group (G1, G2).

## Revendications

1. Procédé pour prévoir une connexion entre un centre de communication (1) et un certain nombre d'unités de communication (2), dans lequel le centre de communication (1) présente une unité d'affichage (11) ainsi qu'une unité de sélection (12) pour sélectionner une zone (16) représentée par l'unité d'affichage (11), et un contrôleur de communication (13), dans lequel
a) la position géographique des unités de communication (2) est déterminée à des instants consécutifs,
b) une carte est représentée sur l'unité d'affichage (11), et un symbole (Y) est représentée sur la carte pour chaque unité de communication (2) à sa position géographique respectivement déterminée,
c) dès qu'une zone (16) de la carte de l'unité d'affichage (11) a été sélectionnée, l'unité de sélection (12) détermine celles des unités de communication (2) dont les symboles (Y) respectivement attribués se trouvent à l'intérieur de la zone (16) sélectionnée ou se recoupent avec celle-ci, et
d) une liaison de données utiles (N) est établie entre le contrôleur de communication (13) [et] les unités de communication (2) sélectionnées,
**caractérisé en ce que**
la sélection de la zone (16) sélectionnée ainsi que des symboles (Y) respectifs et des unités de communication (2) respectives est effectuée selon une ou plusieurs des manières suivantes :
e) tirer une ligne fermée (16') à l'aide de l'unité de sélection (12), dans lequel la zone (16) sélectionnée se trouve à l'intérieur de la ligne fermée, ou
f) effleurer un point sur la carte, dans lequel une région (20a ... 20f) précédemment prédéfinie est sélectionnée comme la zone (16) dans laquelle se trouve le point effleuré.

2. Procédé selon la revendication 1, **caractérisé en ce que** la zone de la carte représentée par l'unité d'affichage (11) est modifiée, en particulier déplacée, agrandie et/ou réduite et/ou la zone de la carte représentée sur l'unité d'affichage (11) est fixée de telle sorte que des symboles (Y) pour toutes les unités de communication (2) et/ou pour celles des unités de communication (2) avec lesquelles il existe une liaison de communication sont représentés sur l'unité d'affichage (11).

3. Procédé selon la revendication 1 ou 2, **caractérisé en ce que** les unités de communication (2) présentent respectivement une unité de détermination de position, dans lequel les unités de communication (2), indépendamment de l'établissement d'une liaison de données utiles (N), transmettent leurs informations de position respectives au contrôleur de communication (13) du centre de communication (1) à des intervalles de temps prédéfinis, par l'intermédiaire d'une liaison de données de position.

4. Procédé selon l'une quelconque des revendications précédentes, **caractérisé en ce que** les unités de communication (2) transmettent des données supplémentaires au centre de communication (1), indépendamment de l'établissement d'une liaison de données utiles, dans lequel lesdites données supplémentaires sont éventuellement représentées sur l'unité d'affichage (11) en même temps que les symboles (Y), et/ou des symboles (Y) différents sont représentés pour l'unité de communication (2) respective sur la base des données supplémentaires.

5. Procédé selon l'une quelconque des revendications précédentes, **caractérisé en ce que** les données et/ou les informations représentées sur l'unité d'affichage (11) et/ou sur l'unité d'affichage supplémentaire (15) sont mises à jour à des instants consécutifs prédéfinis.

6. Procédé selon l'une quelconque des revendications précédentes, **caractérisé en ce que** l'unité de sélection (12) et l'unité d'affichage (11) sont associées à un écran tactile.

7. Procédé selon l'une quelconque des revendications précédentes, **caractérisé en ce qu'**avant la sélection de zones (16) et de symboles (Y), des groupes de connexion (G1, G2) sont prédéfinis auxquels les unités de communication (2) respectivement sélectionnées sont affectées, dans lequel des données utiles entre toutes les unités de communication (2) sont éventuellement transmises par l'intermédiaire du centre de communication (1) à toutes les autres unités de communication (2) du même groupe de connexion (G1, G2).

8. Procédé selon l'une quelconque des revendications précédentes, **caractérisé en ce que** les données de toutes les liaisons de données utiles (N) établies sont représentées dans au moins une autre unité d'affichage (15), et/ou **en ce que** pour chaque groupe de connexion (G1, G2), respectivement une autre unité d'affichage (15) propre est prévue qui représente toutes les unités de communication (2) du groupe de connexion (G1, G2), en particulier sous forme de symboles (Y).

9. Procédé selon l'une quelconque des revendications précédentes, **caractérisé en ce que** lors de la sélection d'une zone (16) à l'intérieur de laquelle il existe un symbole (Y) attribué à une unité de communication (2) déjà sélectionnée,
la liaison de données utiles (N) avec l'unité de communication (2) respective est coupée ou terminée, et/ou
l'unité de communication (2) est retirée du groupe de connexion (G1, G2) respectif.

10. Centre de communication, comprenant une unité d'affichage (11) et un contrôleur de communication (13) pour communiquer avec un certain nombre d'unités de communication (2), comprenant
a) des moyens pour recevoir la position géographique des unités de communication (2) individuelles par l'intermédiaire d'une liaison de données de position (P),
b) des moyens (19) pour la représentation graphique d'une carte sur l'unité d'affichage (11),
c) des moyens (19) pour la représentation graphique de symboles (Y) aux positions géographiques (X) respectives d'emplacements sur la carte correspondant aux unités de communication (2),
d) une unité de sélection (12) pour sélectionner une zone (16) sur la carte représentée sur l'unité d'affichage (11),
e) des moyens pour sélectionner les unités de communication (2) sélectionnées dont les symboles (Y) respectivement attribués se trouvent à l'intérieur de la zone (16) indiquée ou qui sont attribués à la zone (16) ou qui se recoupent avec la zone (16),
f) des moyens (17) pour commander le contrôleur de communication (13) pour établir une liaison de données utiles (N) avec les unités de communication (2) sélectionnées,
**caractérisé en ce que**
une unité d'attribution (17) est prévue qui est placée en aval de l'unité de sélection (12) qui ordonne au contrôleur de communication (13) d'établir des liaisons de données utiles (N), et qui présente éventuellement une mémoire pour stocker et gérer les groupes de connexion (G1, G2), dans lequel l'unité d'attribution (17) permet de sélectionner la zone (16) sélectionnée ainsi que les symboles (Y) respectifs et les unités de communication (2) respectives selon une ou plusieurs des manières suivantes :
g) tirer une ligne fermée à l'aide de l'unité de sélection (12), dans lequel la zone (16) sélectionnée correspond à l'intérieur de la ligne fermée (16'), ou
h) effleurer un point sur la carte, dans lequel une zone (16) précédemment prédéfinie est sélectionnée à l'intérieur de laquelle se trouve le point effleuré.

11. Centre de communication selon la revendication 10, **caractérisé par** une unité de sélection de zone pour déplacer, agrandir et réduire la zone de la carte représentée par l'unité d'affichage (11).

12. Centre de communication selon l'une quelconque des revendications 10 ou 11, **caractérisé en ce qu'**une unité de contrôle de représentation (19) est prévue à laquelle sont fournies les positions (X) déterminées respectives des unités de communication (2) individuelles ainsi que des données cartographiques stockées dans une base de données (18), en particulier la position géographique (Z) de points de route et/ou la position géographique d'autres installations fixes et/ou mobiles,
dans lequel l'unité de contrôle de représentation (19) crée sur la base des données qui lui sont fournies une image d'affichage qui est fournie à l'unité d'affichage (11).

13. Centre de communication selon l'une quelconque des revendications 10 à 12, **caractérisé en ce que** l'unité de sélection (12) et l'unité d'affichage (11) sont associées à un écran tactile.

14. Centre de communication selon l'une quelconque des revendications 10 à 13, **caractérisé en ce qu'**avant la sélection des zones (16) et des symboles (Y), des groupes de connexion (G1, G2) sont prédéfinis auxquels on peut affecter les unités de communication (2) respectivement sélectionnées, dans lequel le contrôleur de communication (13) peut éventuellement être programmé de sorte que des données utiles entre toutes les unités de communication (2) d'un groupe de connexion (G1, G2) sont transmises à toutes les autres unités de communication (2) du même groupe de connexion par l'intermédiaire du centre de communication (1).

15. Centre de communication selon l'une quelconque des revendications 10 à 14, **caractérisé en ce qu'**au moins une unité d'affichage (15) supplémentaire est prévue pour représenter les données de toutes les liaisons de données utiles (N) établies, et/ou **en ce que** pour chaque groupe de connexion (G1, G2), une autre unité d'affichage (15) propre est prévue qui représente toutes les unités de communication (2) appartenant au groupe de connexion (G1, G2), en particulier sous forme de symboles (Y).

16. Centre de communication selon l'une quelconque des revendications 10 à 15, **caractérisé en ce que** lors de la sélection d'une zone (16), dans laquelle se trouve un symbole (Y) attribué à une unité de communication (2) déjà sélectionnée ou appartenant à un groupe de communication (G1, G2), l'unité d'attribution (17) coupe ou termine la liaison de données utiles (N) avec l'unité de communication (2) respective, et/ou retire l'unité de communication (2) du groupe de connexion (G1, G2) respectif.
